(19) Europäisches Patentamt
European Patent Office
Office européen des brevets

(11) Veröffentlichungsnummer: **0 250 971**
**A1**

# (12) EUROPÄISCHE PATENTANMELDUNG

(21) Anmeldenummer: **87108450.5**

(22) Anmeldetag: **11.06.87**

(51) Int.Cl.[3]: **C 25 B 3/02**

(30) Priorität: **13.06.86 DE 3620013**

(43) Veröffentlichungstag der Anmeldung: **07.01.88 Patentblatt 88/1**

(84) Benannte Vertragsstaaten: **BE CH DE FR GB IT LI NL**

(71) Anmelder: **BASF Aktiengesellschaft**
**Carl-Bosch-Strasse 38**
**D-6700 Ludwigshafen(DE)**

(72) Erfinder: **Steiniger, Michael, Dr.**
**Wolfskeule 12**
**D-6730 Neustadt(DE)**

(72) Erfinder: **Voss, Hartwig, Dr.**
**Mozartstrasse 57**
**D-6710 Frankenthal(DE)**

(54) **Verfahren zur Herstellung von Alkoxyessigsäuren.**

(57) Herstellung von Alkoxyessigsäuren der Formel

$$ROCH_2COOH \quad (I)$$

in der R einen Alkylrest bezeichnet, durch elektrolytische Oxidation von Alkoxyethanolen der Formel

$$ROCH_2CH_2OH \quad (II)$$

in Gegenwart eines elektrochemisch regenerierbaren Redoxkatalysators.



Croydon Printing Company Ltd.

BASF Aktiengesellschaft

# Verfahren zur Herstellung von Alkoxyessigsäuren

Die vorliegende Erfindung betrifft ein neues Verfahren zur Herstellung von Alkoxyessigsäuren durch elektrochemische Oxidation von Alkoxyethanolen.

Alkoxyessigsäuren lassen sich z.B. nach den in der US-PS 3 342 858 und der DE-OS 29 36 123 beschriebenen Verfahren durch Oxidation von Alkoxyethanolen an Platinkatalysatoren mit Sauerstoff herstellen. Nachteilig bei diesen Verfahren, die sich im wesentlichen nur durch den pH-Bereich des Reaktionsmediums unterscheiden, ist der hohe spezifische Platineinsatz (Pt-Menge/Mol Alkoxyethanol), der bei den üblichen Verlusten die Wirtschaftlichkeit des Verfahrens beeinträchtigt. Nach den Angaben der DE-OS 31 35 946 läßt sich der spezifische Katalysatoreinsatz (Platin oder Palladium) durch Zusatz von Aktivatoren wie Blei, Bismut oder Cadmium verringern. Bei diesem und den obengenannten Verfahren ist der Umgang mit Sauerstoff aus sicherheitstechnischen Gründen sehr aufwendig. Die technische Durchführung der in der DE-OS 28 32 949 und der DE-OS 32 09 622 beschriebenen Verfahren, bei denen man Alkoxyethanole mit überschüssiger, hochkonzentrierter Salpetersäure zu Alkoxyessigsäuren oxidiert, ist ebenfalls problematisch. So muß man die Reaktion zur Erzeugung von $NO_2$ entweder bei 90°C anfahren oder durch Zugabe von entsprechenden Alkoxyacetaldehyden starten. Darüber hinaus verlangt die Vernichtung überschüssiger Salpetersäure weitere Verfahrensschritte, die entweder zu Ausbeuteverlusten durch Überoxidation führen, oder den Zusatz von Formaldehyd bzw. Alkoxyacetaldehyden erfordern.

Der Erfindung lag nun die Aufgabe zugrunde, ein Verfahren zu finden, das es ermöglicht, Alkoxyessigsäuren auf technisch einfache ökonomische und umweltfreundliche Weise herzustellen.

Nach dem neuen Verfahren, das diese Anforderungen erfüllt, stellt man Alkoxyessigsäuren der allgemeinen Formel

$$ROCH_2COOH \qquad (I),$$

in der R für einen Alkylrest mit 1 bis 12 Kohlenstoffatomen steht, dadurch her, daß man eine wäßrige Lösung eines Alkoxyethanols der allgemeinen Formel

$$ROCH_2CH_2OH \qquad (II),$$

in der R die obengenannte Bedeutung hat, in Gegenwart eines elektrochemisch regenerierbaren Redoxkatalysators elektrolysiert und die Alkoxyessigsäure aus dem wäßrigen Elektrolyseaustrag isoliert.

Das Ergebnis des erfindungsgemäßen Verfahrens ist überraschend, da z.B. aus J. Am. Chem. Soc. 95, 2193-2198 (1973) bekannt ist, daß die elektrochemische Oxidation von Methoxyethanol an Platin-Anoden zu Formaldehyd und Methanol bzw. an Graphit-anoden zu Polyethergemischen führt, wie folgende Reaktionsgleichung verdeutlicht:

$$MeOCH_2CH_2OH \xrightarrow{-e^{\ominus}} HCHO + MeOCH_2CH_2OCH_2OCH_2CH_2OR \quad (R=H,\ Me) +$$
$$MeOCH_2CH_2OCH_2OCH_2OMe + HOCH_2CH(OMe)CH_2CH_2OMe$$

Das erfindungsgemäße Verfahren läßt sich durch die folgenden Formeln beschreiben:

$$ROCH_2CH_2OH + H_2O + mMed_{ox} \longrightarrow ROCH_2COOH + 4\ H + mMed_{Red}$$

$$Med_{Red} \xrightarrow[Anode]{-ne^{\ominus}} Med_{ox}$$

Als Alkylreste R kommen geradkettige oder verzweigte Kohlenwasserstoffreste mit 1 bis 12, vorzugsweise 1 bis 8, insbesondere 1 bis 4 Kohlenstoffatomen, wie Methyl, Ethyl, n- und iso-Propyl, n-, iso-und tert.-Butyl in Betracht. Als Ausgangsstoffe der Formel II seien z.B. die folgenden Alkoxyethanole genannt: Methylglykol, Ethylglykol, n-Propylglykol, iso-Propylglykol, n-Butylglykol, tert.-Butylglykol und bevorzugt Methylglykol.

Das erfindungsgemäße Verfahren erfordert einen elektrochemisch regenerierbaren Redoxkatalysator. Ein Redoxkatalysator der genannten Art, der z.B. auch als Redoxmediator bezeichnet wird, kann im Elektrolyten als homogene Lösung oder in suspendierter Form vorliegen. Bevorzugt befindet er sich als festhaftende Schicht auf der Anode. Redoxkatalysatoren der genannten Art sind z.B. die Oxide des Mangans, Eisens, Silbers, Cobalts, Nickels oder Kupfers, von denen Nickeloxid (Nickelperoxid, Nickeloxidhydroxid) bevorzugt ist.

Man elektrolysiert die Alkoxyethanole nach dem erfindungsgemäßen Verfahren in wäßrig-saurem, wäßrig-neutralem oder in wäßrig-alkalischem Medium, vorzugsweise bei einem pH-Wert von 9 bis 14, insbesondere 12 bis 14. Zur

Einstellung des pH-Wertes gibt man zum Elektrolyten z.b. Alkali- und/oder Erdalkalimetallhydroxide, -carbonate, -hydrogencarbonate, -phosphate, -hydrogenphosphate und -borate, bevorzugt aber die Hydroxide und/oder Carbonate des Natriums. Da Hydroxylionen in äquimolaren Mengen zur Bildung der Alkoxyessigsäuren verbraucht werden, sollte das Molverhältnis Alkoxyethanol zum Alkali- bzw. Erdalkalisalz zwischen 1:1,0 und 1:1,5 liegen. Es können aber auch höhere Alkali- bzw. Erdalkalikonzentrationen angewendet werden.

Geeignete Elektrolyten sind demnach wäßrige alkalische Lösungen des Alkoxyethanols, die z.B. einen Gehalt an Alkoxyethanol von 1 bis 40, vorzugsweise 3 bis 20 Gew.% und einen Gehalt an Alkali bzw. Erdalkali aufweisen, wie er dem geforderten Molverhältnis und dem gewünschten Umsatz entspricht. Man kann dem Elektrolyten zur Verbesserung der Löslichkeit des Alkoxyethanols ein inertes organisches, mit Wasser mischbares Lösungsmittel zusetzen. Geeignete Lösungsmittel sind Nitrile, wie Acetonitril, Ether, wie Tetrahydrofuran oder Dioxan, oder Alkohole wie tert.-Butanol.

Das erfindungsgemäße Verfahren erfordert keine besondere Elektrolysezelle. Vorteilhaft kann man es in einer ungeteilten Durchflußzelle durchführen. Als Kathoden können alle an sich üblichen Kathodenmaterialien verwendet werden, die unter den Elektrolysebedingungen stabil sind, wie Eisen, Stahl, Nickel, Kupfer oder Edelmetalle wie Platin. Bevorzugtes Kathodenmaterial sind Stahl und Nickel.

Nickeloxid, das bevorzugte Redoxkatalysatorsystem, befindet sich als dünne Schicht auf Anodenträgermaterialien wie Kohlenstoff, Stahl oder Kupfer. Solche Anoden lassen sich z.B. nach dem in J.Appl.Electrochem. 9, 707 (1979) beschriebenen Verfahren herstellen.

Bevorzugt werden jedoch Nickeloxid-Schichten auf Nickel als Anodenträgermaterial. Nach den Angaben z.B. in Tetrahedron 38, 3299 (1982) muß eine derartige Nickel-Anode vor der Elektrolyse aktiviert werden, in dem man sie z.B. in einer wäßrigen Lösung mit 0.1 N Nickelsulfat, 0.1 N Natriumacetat und 0.005 N Natriumhydroxid bei Stromdichten zwischen 5 mA/cm$^2$ und 1 mA/cm$^2$ kurzzeitig mehrmals umpolt. Nichtaktivierte Elektroden erfordern wesentlich längere Elektrolysezeiten. Überraschenderweise kann man beim erfindungsgemäßen Verfahren aber auch mit Anoden vorteilhafte Ergebnisse erzielen, die vor ihrem Einsatz nicht aktiviert worden sind. So erhält man z.B. mit unbeschichteten und nicht aktivierten Nickelanoden bei gleicher Temperatur und Stromdichte die gleichen Strom- und Materialausbeuten an Alkoxiessigsäuren wie beim Einsatz aktivierter Nickelanoden. Offenbar ist die dünne Nickelhydroxid-Schicht, die sich in alkalischer Lösung immer als Deckschicht auf metallischem Nickel befindet, bei den erfindungsgemäßen Reaktionsbedingungen ausreichend, um bei anodischer Polarisierung eine aktive Oxidhydroxid-Deckschicht auszubilden. Nach einer Versuchsdauer von etwa 30 Ah hat sich die unbehandelte nicht aktivierte Nickelanode mit einer schwarzen festhaftenden Nickeloxidhydroxid-Schicht überzogen, und ist von einer aktivierten Anode bezüglich optisches Erscheinungsbild, Versuchsergebnissen und Standzeiten nicht zu unterscheiden.

Die Elektrolyse wird z.B. mit 1 bis 6 F/mol, vorzugsweise 2 bis 4,5 F/mol Alkoxyethanol durchgeführt. Die Stromdichte beträgt z.B. 0,5 bis 6 $A/dm^2$, vorzugsweise 1 bis 3 $A/dm^2$. Man führt das erfindungsgemäße Verfahren bei Temperaturen durch, die z.B. höchstens 10°C unter dem Siedepunkt des eingesetzten Elektrolyten liegen. Vorzugsweise elektrolysiert man im Temperaturbereich zwischen 20 und 60°C, insbesondere zwischen 20 und 40°C. Die Elektrolyse kann sowohl diskontinuierlich als auch kontinuierlich durchgeführt werden.

Die Aufarbeitung der Elektrolyseausträge zur Isolierung der Alkoxyessigsäuren kann man nach verschiedenen Methoden vornehmen. So kann man z.B. nach der in der US-PS 3 342 858 beschriebenen Methode verfahren und das Alkalisalz der Alkoxyessigsäure durch Zugabe einer anorganischen Säure, wie Salzsäure, freisetzen und die Reaktionslösung, gegebenenfalls nach einer Herabsetzung der Löslichkeit der Alkoxyessigsäuren durch Zugabe von Salzen, wie $Na_2SO_4$, mit Lösungsmitteln, wie Ethylether, extrahieren. Man kann die Elektrolyseausträge aber auch nach dem Ansäuern mit Salzsäure eindampfen und die Alkoxyessigsäure durch Reindestillation gewinnen.

Vorteilhafter ist es, wenn man die alkalischen Elektrolyseausträge durch ein an sich bekanntes Membranverfahren, wie Diffusionsdialyse, Donnanalyse und Elektrodialyse aufarbeitet. Nach einer besonders vorteilhaften Ausführungsform des erfindungsgemäßen Verfahrens isoliert man die Alkoxyessigsäuren aus den Elektrolyseausträgen durch Elektrodialyse mit bipolaren Membranen. Diese Verfahrensweise, die man z.B. in einem Zweikreis- oder Dreikreissystem durchführt, ermöglicht die Freisetzung der Alkoxyessigsäuren aus ihrem Salz bei gleichzeitiger Rückgewinnung des wäßrig-alkalischen Elektrolyten, der zur Elektrolyse rückgeführt werden kann. Diese Verfahrensvariante ist besonders wirtschaftlich und umweltfreundlich.

Alkoxyessigsäuren, insbesondere die Methoxyessigsäure, sind Hilfsmittel in der Textilindustrie und wichtige Zwischenprodukte für die Herstellung von Pflanzenschutzmittel.

Beispiele

Die Elektrooxidationen wurden in einer ungeteilten Elektrolysezelle mit Stahl und/oder Nickelelektroden galvanostatisch durchgeführt. Während der Elektrolyse wurde der Elektrolyt, dessen Zusammensetzung den Beispielen 1 bis 8 zu entnehmen ist, mit 150 bis 200 l/h über einen Wärmetauscher durch die Zelle gepumpt.

Zur Aktivierung der Nickel-Anode bzw. Beschichtung der Stahl-Anode mit einer dünnen Nickeloxidhydroxid-Schicht wurden die Anoden in einer wäßrigen Lösung der Zusammensetzung 0,1 N Nickel(II)sulfat, 0,1 N Natriumacetat und 0,005 N Natriumhydroxid bei einer Stromdichte von 1 $mA/cm^2$ alternierend als Anode und Kathode geschaltet (5-10 sec). Nach Durchgang einer Ladungsmenge von 0,5 A $sec/cm^2$ wurden die Anoden, die sich mit einem schwarzen, fest haftenden Belag von Nickel(III)oxidhydroxid überzogen hatten, mit destilliertem Wasser gespült und zur Elektrolyse eingesetzt.

Beispiel 1

In der oben beschriebenen Elektrolysezelle, die mit einer aktivierten Nickeloxidhydroxid-Anode versehen war, wurde eine Lösung von 76 g Methylglykol und 66 g NaOH in 550 g Wasser bei einer Stromdichte von 1,5 $A/dm^2$ und einer Temperatur von 20°C mit 4,5 F/mol Methylglykol elektrolysiert. Die ionenchromatographische Analyse zeigte, daß im Elektrolyseaustrag 90 g Methoxyessigsäure enthalten waren, was einem quantitativen Umsatz und einer Ausbeute von 100 % entspricht (Fehler ±5 %). Der Elektrolyseaustrag wurde durch Ansäuern mit HCl auf pH 1 gestellt. Dann wurde ein $H_2O$/HCl-Gemisch abdestilliert und der Rückstand in Methyl-t-butylether aufgenommen. Durch Reindestillation wurden bei 103°C/32 bar 75,6 g Methoxyessigsäure erhalten, woraus sich eine Materialausbeute von 84 % errechnet.

Beispiel 2

Die in Beispiel 1 beschriebene Elektrolyse wurde wiederholt, wobei man jedoch eine nicht aktivierte Nickelanode verwendete. Durch ionenchromatographische Analyse des Elektrolyseaustrags wurden 91,3 g Methoxyessigsäure, entsprechend einer Ausbeute von 101 % (Fehler ±5 %) ermittelt.

In einer mit fünf bipolaren Membranen und fünf Kationenaustauschermembranen bestückten Elektrodialysezelle (Elektrodenspüllösung: 5 %ige wäßrige $Na_2SO_4$-Lösung; Basenkreis: 500 g 0,5 %ige wäßrige NaOH) wurde der alkalische Elektrolyseaustrag als Säurekreis zur Freisetzung der reinen Methoxyessigsäure in einem Zweikreissystem elektrodialysiert. Nach Erreichen einer Endleitfähigkeit von 4,96 mS/cm, einem End-pH-Wert von 1,68 wurde die Elektrodialyse abgebrochen. Eine Analyse des Austrages (531 g) ergab einen $Na^+$-Gehalt von 0,025 %. Daraus errechnet sich eine Abreicherung an $Na^+$ von 99,6 %. Durch destillative Aufarbeitung konnten 79,5 g Methoxyessigsäure entsprechend einer Materialausbeute von 88 % isoliert werden. Der Austrag des Basenkreises (645 g) mit 5,95 % $Na^+$ wurde zur Elektrolyse rückgeführt.

Beispiele 3 bis 8

Entsprechend den Angaben der Beispiele 1 und 2 wurden weitere Elektrolysen durchgeführt. Einzelheiten sind der Tabelle zu entnehmen.

Tabelle

| Beispiel | Ausgangsstoff (II) (R) | (g) | Elektrolyt (Gew.%) | Anode | Stromdichte (A/dm$^2$) | Elektrizitätsmenge (F/mol) | Ausbeute (g) | (%) |
|---|---|---|---|---|---|---|---|---|
| 3 | $CH_3$ | 114 | 16,4 II<br>11,5 NaOH<br>72,1 $H_2O$ | Ni/NiOOH nicht aktiviert | 2 | 4,5 | 130[1] | 96[1] |
| 4 | $C_2H_5$ | 236 | 10 II<br>8,9 NaOH<br>81,1 $H_2O$ | Ni/NiOOH nicht aktiviert | 2 | 4,0 | 232[2] | 83[2] |
| 5 | $CH_3$ | 76 | 11 II<br>9,5 NaOH<br>79,5 $H_2O$ | $V_2A$/NiOOH | 1,5 | 4,5 | 72[2] | 80[2] |
| 6 | $CH_3$ | 182 | 9,6 II<br>11,2 NaOH<br>79,2 $H_2O$ | Ni/NiOOH | 1,5 | 4,5 | 195[1] | 90[1] |
| 7 | $CH_3$ | 76 | 5,6 II<br>0,9 $NiSO_4 \cdot 6H_2O$<br>4,5 NaOH<br>89,0 $H_2O$ | Graphit | 10 | 9,5 | 48[1] | 53[1] |
| 8 | $CH_3$ | 140 | 7,0 II<br>9,3 $H_2SO_4$<br>83,7 $H_2O$ | Ti/$MnO_2$ | 3 | 4,5 | 53[1] | 31[1] |

1) Ionenchromatographische Bestimmung (Fehler ±5 %)

2) Isolierte Ausbeute analog Beispiel 2

0250971

O.Z. 0050/38494

BASF Aktiengesellschaft

Patentansprüche

1. Verfahren zur Herstellung von Alkoxyessigsäuren der allgemeinen Formel

$$ROCH_2COOH \quad (I)$$

in der R einen Alkylrest bezeichnet, dadurch gekennzeichnet, daß man eine wäßrige Lösung eines Alkoxyethanols der allgemeinen Formel

$$ROCH_2CH_2OH \quad (II)$$

in der R die obengenannte Bedeutung hat, in Gegenwart eines elektrochemisch regenerierbaren Redoxkatalysators elektrolysiert und die Alkoxyessigsäure aus dem wäßrigen Elektrolyseaustrag isoliert.

2. Verfahren nach Anspruch 1, dadurch gekennzeichnet, daß sich der elektrochemisch regenerierbare Redoxkatalysator als festhaftende Schicht auf der Anode befindet.

3. Verfahren nach Anspruch 1 und 2, dadurch gekennzeichnet, daß man als elektrochemisch regenerierbaren Redoxkatalysator ein Metalloxid verwendet.

4. Verfahren nach Anspruch 1 und 2, dadurch gekennzeichnet, daß man als elektrochemisch regenerierbaren Redoxkatalysator ein Metalloxidhydroxid verwendet.

5. Verfahren nach den Ansprüchen 1, 2 und 4, dadurch gekennzeichnet, daß man als Redoxkatalysator $Ni(OH)_2/NiOOH$ verwendet.

6. Verfahren nach den Ansprüchen 1 bis 5, dadurch gekennzeichnet, daß man als Elektrolyt eine wäßrig-alkalische Lösung des Alkoxyethanols mit einem Gehalt an Alkoxyethanol von 1 bis 40 Gew.% und einem pH-Wert von 9 bis 14 verwendet.

7. Verfahren nach den Ansprüchen 1 bis 6, dadurch gekennzeichnet, daß man die Elektrolyse bei Temperaturen, die höchstens $10^0C$ unter dem Siedepunkt des Elektrolyten liegen und bei einer Stromdichte von 0,5 bis 6 $A/dm^2$ durchführt.

Hee

204/86 Hee/HB 12.06.1986

8. Verfahren nach den Ansprüchen 1 bis 6, <u>dadurch gekennzeichnet</u>, daß man die Alkoxyessigsäure aus dem Elektrolyseaustrag unter Verwendung eines Membranverfahrens isoliert.

9. Verfahren nach den Ansprüchen 1 bis 8, <u>dadurch gekennzeichnet</u>, daß man den Elektrolyseaustrag einer Elektrodialyse an bipolaren Membranen unterwirft, wobei man die Alkoxyessigsäure aus ihrem Salz freisetzt und die dabei gleichzeitig anfallende wäßrig-alkalische Lösung nach Zugabe von Alkoxyethanol zur Elektrolyse zurückführt.

0250971

Europäisches Patentamt

# EUROPÄISCHER RECHERCHENBERICHT

Nummer der Anmeldung

EP 87 10 8450

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 488 944 (THE DOW CHEMICAL CO.)<br>* Spalte 2, Zeilen 30-64; Spalten 5,6 *<br>--- | 1-7 | C 25 B 3/02 |
| A | DE-A-3 443 303 (HOECHST)<br>* Seite 1; Patentansprüche *<br>----- | 1 | |
| | | | RECHERCHIERTE SACHGEBIETE (Int. Cl.4) |
| | | | C 25 B 3 |

Der vorliegende Recherchenbericht wurde für alle Patentansprüche erstellt.

| Recherchenort | Abschlußdatum der Recherche | Prüfer |
|---|---|---|
| DEN HAAG | 06-10-1987 | GROSEILLER PH.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82